# FASCICULE DE BREVET EUROPEEN

(11) **EP 3 853 918 B1**
(45) Date de publication et mention de la délivrance du brevet: **13.07.2022**
(21) Numéro de dépôt: 19774164.8
(22) Date de dépôt: 02.09.2019
(51) Int. Cl.: H01M 50/20, B21D 39/03, B05D 5/10

(54) **PROCEDE D'ASSEMBLAGE DE DEUX TOLES SE CHEVAUCHANT PARTIELLEMENT AVEC TRIPLE ETANCHEITE**
VERFAHREN ZUM ZUSAMMENBAU ZWEIER TEILWEISE ÜBERLAPPENDER BLECHE MIT EINER DREIFACHDICHTUNG
METHOD FOR ASSEMBLING TWO PARTIALLY OVERLAPPING METAL SHEETS WITH A TRIPLE SEAL

(30) Priorité: 19.09.2018 FR 1858455
(43) Date de publication de la demande: 28.07.2021
(73) Titulaire: PSA Automobiles SA, 78300 Poissy (FR)
(72) Inventeur: KRSTIC, Dragan, 90400 DANJOUTIN (FR); DARTHUY, Laurent, 94430 CHENNEVIERES SUR MARNE (FR)
(86) Numéro de dépôt international: PCT/FR2019/052017
(87) Numéro de publication internationale: WO 2020/058592

(56) Documents cités:
- EP-A1- 1 176 229
- WO-A1-2006/109610
- WO-A1-2017/178634
- DE-A1-102009 037 726
- US-A1- 2014 370 365

## Description

La présente invention concerne un procédé d'assemblage d'au moins deux tôles se chevauchant partiellement avec triple étanchéité. La présente invention concerne aussi une pièce réalisée au moins à partir d'au moins deux tôles assemblées conformément à un tel procédé.

La pièce est avantageusement mais non limitativement un bac de batterie de traction, notamment pour un véhicule automobile à propulsion électrique ou hybride garantissant une étanchéité pour la batterie logée à l'intérieur du bac.

Dans ce qui suit, il va être pris comme exemple un tel bac pour un véhicule automobile à propulsion au moins partiellement hybride, ce qui n'est pas limitatif, la présente invention pouvant concerner toute pièce fabriquée à partir de deux tôles dont des portions d'extrémité se chevauchent.

Un bac de batterie est un assemblage de pièce tôle formant un sarcophage destiné à protéger les modules électriques ou autrement appelés batteries de puissance. Le bac de batterie est positionné sous le soubassement du véhicule en zone extérieure. Le sarcophage formé par le bac de batterie doit impérativement être étanche pour éviter tout risque d'intrusion d'eau provenant de l'environnement extérieur.

Le niveau d'étanchéité exigé pour le bon fonctionnement des batteries est réglementé et classifié selon les normes internationales en étant dans le plus haut des niveaux d'exigences connus dans l'univers de la conception automobile.

Le bac de batterie est selon une description simplifiée composé d'une partie inférieure et d'une partie supérieure formant couvercle. La ou les batteries de puissance et autres organes électriques auxiliaires sont logés en étant montés dans la partie inférieure puis l'ensemble est recouvert par le couvercle afin de former un sarcophage étanche autour de la ou des batteries et des autres organes auxiliaires.

Entre ces deux parties inférieure et supérieure, une barrière d'étanchéité est mise en place. Le bac de batterie est fréquemment formé de tôles embouties, avantageusement en acier inoxydable ou en composite.

Le couvercle formant partie supérieure peut être, en regard de sa complexité, réalisée en cinq éléments indépendants emboutis en tôles. Les cinq tôles sont assemblées entre elles par soudure. Le bac inférieur est constitué d'une multitude de pièces mais seules deux d'entre elles assurent l'étanchéité, ces deux tôles embouties étant également liées par soudure.

Il est connu, notamment dans le domaine des véhicules automobiles, d'assurer l'étanchéité entre deux pièces en tôle à l'aide d'un cordon d'étanchéité. Cependant, compte tenu du niveau élevé d'étanchéité requis, l'implantation d'un simple cordon entre les deux pièces en tôle n'est pas suffisant pour garantir un tel niveau.

Une première proposition est d'utiliser des inserts gonflants pour assurer l'étanchéité entre les tôles. Cette technologie est onéreuse et présente l'inconvénient d'être encombrante et donc non compatible avec un environnement d'un bac de batterie.

Les bacs de batterie sont généralement compactés au maximum afin de mettre un maximum de modules dans un minimum de place. Cet objectif de compactage laisse très peu de place entre les éléments structurels que sont les tôles du bac de batterie et les organes électriques. Il reste également très peu de place à l'extérieur entre le bac de batterie et la base du véhicule.

Une deuxième proposition consiste à utiliser une technologie de cordon d'étanchéité déposé par peinture après l'assemblage des deux tôles, ce qui est une pratique réputée moins encombrante que les inserts gonflants. Ces cordons sont cependant nécessairement repris pour être lissés. Cette opération est inévitable afin de ne pas générer de proximité avec l'environnement extérieur ou intérieur du bac de batterie. Une fois lissé ce cordon ne présente aucune surépaisseur car il reste juste la quantité de matière nécessaire pour couvrir l'espacement entre les deux tôles.

Le cordon lissé est cependant moin robuste car il est moins épais et donc plus cassant. Le bac de batterie participant aux prestations du véhicule telles que la torsion ou lors d'une exposition aux chocs, s'il est pris l'exemple de la pretation en torsion, on sait par évaluation numérique que les zones de raccord entre tôles, c'est-à-dire les zones où se trouvent les points de soudure entre les tôles, d'un bac de batterie travaillent.

Il y a donc des déplacements relatifs entre tôles qui ont tendance à fissurer les cordons, surtout les cordons lissés qui sont plus fragiles. Un cordon fissuré ne garantit plus sa fonction principale l'étanchéité.

Une troisième proprosition est d'utiliser un cordon d'étanchéité au ferrage. Contrairement au cordon mis en peinture, un cordon d'étanchéité est déposé avant l'assemblage des deux tôles. Un tel cordon d'étanchéité présente donc l'avantage d'être écrasé entre les deux tôles et donc de ne pas prendre de place. Son inconvénient est de ne pas permettre l'étanchéité entre deux pièces qui ont des formes complexes comme par exemple deux pièces en forme de U.

Par exemple, un cordon de colle devant assurer l'étanchéité précédemment déposé sur une des deux tôles est partiellement essuyé en étant déformé lors de l'application des deux tôles l'une contre l'autre. Le cordon de colle adhère à la tôle qui descend et enroule avec lui le reste du cordon.

A la fin de l'assemblage, la qualité du cordon n'est pas garantie. Il est donc, par expérience, considéré qu'un cordon mis au ferrage entre deux tôles, notamment des tôles ayant une forme en U et emboîtées l'une dans l'autre, aussi désignées par tôles U dans U, ne peut pas être certifié étanche.

Or un bac de batterie et notamment sa partie supérieure peut présenter trois tôles qui sont assemblées en des zones en formant des assemblages de tôles U dans U. En conclusion, la technologie de cordon de colle étanche mis au ferrage ne peut pas être retenu sous sa forme habituelle pour des pièces requérant une étanchéité d'un niveau élevé, comme un bac de batterie. EP 1 176 229 A1 divulgue un procédé d'assemblage d'au moins deux tôles avec une portion d'extrémité d'une première tôle chevauchant une portion d'extrémité d'au moins une deuxième tôle comprenant une solidarisation locale des portions d'extrémité l'une à l'autre.

Par conséquent, le problème à la base de l'invention est de garantir un haut niveau d'étanchéité entre deux tôles dont les portions d'extrémité se chevauchent par des moyens simples et efficaces.

Pour atteindre cet objectif, il est prévu selon l'invention un procédé d'assemblage d'au moins deux tôles avec une portion d'extrémité d'une première tôle chevauchant une portion d'extrémité d'au moins une deuxième tôle comprenant les étapes suivantes:
- application d'un cordon de colle étanche dans une largeur de la portion d'extrémité d'une des tôles,
- chevauchement des portions d'extrémité et écrasement du cordon de colle entre les portions d'extrémité,
- solidarisation locale des portions d'extrémité l'une à l'autre,
- application d'un premier cordon d'étanchéité du type mastic sur une extrémité libre de la portion d'extrémité de la première tôle et sur une zone en vis-à-vis de la deuxième tôle,
- retournement desdites au moins deux tôles et application d'un deuxième cordon d'étanchéité du type mastic sur une extrémité libre de la portion d'extrémité de la deuxième tôle et sur une zone en vis-à-vis de la première tôle.

La présente propositon d'invention consiste à réaliser une triple barrière d'étanchéité au niveau du chevauchement partiel des extrémités d'au moins deux tôles, avantageusement et non limitativement pour la réalisation d'un bac de batterie.

Par tôle, il n'est pas forcément entendu un élément à surface plane, la tôle pouvant avoir été emboutie en présentant une déformation quelconque, notamment une section en U. Le chevauchement peut être non limitativement l'introduction d'une portion d'extrémité d'une première tôle en forme de U dans une deuxième tôle ayant également une section en U ou l'introduction d'une tôle repliée sur elle-même par exemple en formant un cylindre dans une autre tôle de même forme.

Par chevauchement de portions d'extrémité de deux tôles, il est entendu aussi bien une superposition de portions d'extrémité qu'un emboîtement d'une portion d'extrémité d'extrémité d'une tôle dans une portion d'extrémité d'une autre tôle, par exemple un emboîtement d'une tôle en section en forme de U dans une tôle présentant aussi une section en forme de U. D'autres possibilités de chevauchement sont aussi possibles comme un chevauchement de tôle de forme en arc de cercle fermé ou non fermé.

La triple barrière d'étanchéité consiste à réaliser un cordon de colle étanche avant l'assemblage des deux tôles et de compléter l'étanchéité ainsi obtenue à l'aide de deux barrières suplémentaires réalisées par la dépose de deux cordons d'étanchéité du type mastic lors d'une peinture à l'extrémité libre de chacune des deux tôles. Ces deux derniers cordons d'étanchéité du type mastic seront idéalement lissés afin de ne pas génerer des proximités avec l'environnement.

Ces deux mesures ne sont pas seulement une juxtaposition de moyens connus mais présentent des effets interactifs entre eux.

Le cordon de colle écrasé entre les deux tôles présente l'intérêt d'aller combler les trous qui sont formés entre les deux tôles se chevauchant ou emboîtées l'une dans l'autre. Il y a donc interaction entre l'application d'un cordon de colle et la solidarisation des deux tôles qui écrase le cordon et le répartit uniformément au moins localement entre les deux portions d'extrémité des deux colles.

En effet, il est par expérience connu que les cordons de colle qui remplissent les jeux dans les courbures entre tôles confèrent un grand gain de raideur. Cette raideur augmentée va permettre de moins solliciter les cordons d'étanchéité aux extrémités des deux tôles qui sont justement sensibles avec risques de fissures dans ces zones où les mouvements relatifs entre tôles sont plus importants. Le cordon de colle étanche permet également de former un appui supplémentaire pour chaque cordon d'étanchéité à une extrémité libre de chaque tôle entre les coins formés par la jonction de deux tôles. En effet, il y a selon les règles d'assemblage des jeux nécessaires entre l'extrémité libre d'une tôle et l'autre tôle qui forment des cavités ou trous. La colle déposée entre les deux tôles remplit ces cavités.

Les caractéristiques différentes et les modes d'application différents des trois cordons, dont le cordon de colle et les premier et deuxième cordons d'étanchéité d'extrémité libre permettent une complémentarité où chaque cordon palie aux lacunes de l'autre pour former une étanchéité fiable et durable.

En effet, le cordon de colle assure une protection là ou un des premier et deuxième cordons d'extrémité libre peut lâcher. Inversement, les premier et deuxième cordons d'étanchéité d'extrémité libre sont efficaces dans des déplacements en ligne droite de l'assemblage là où le cordon de colle peut être moins efficace et compensent donc les faiblesses du cordon de colle pris uniquement.

Avantageusement, la solidarisation se fait par soudage ou par emboutissage desdites au moins deux tôles entre au moins un jeu d'un poinçon et d'une matrice.

Avantageusement, le soudage est effectué sur une partie des portions d'extrémité se trouvant à distance du cordon de colle, le soudage étant un soudage par points ou un soudage laser.

Avantageusement, les premier et deuxième cordons d'étanchéité sont lissés afin de ne pas faire saillie vers l'extérieur de l'extrémité libre de la portion d'extrémité respectivement de la première tôle ou de la deuxième tôle. Cette mesure peut diminuer l'étanchéité garantie par un cordon à une extrémité libre d'une tôle mais est avantageuse pour ne pas former de point d'accroche faisant saillie des deux tôles.

L'opération de lissage consiste à laisser le strict nécessaire de mastic suffisant pour assurer l'étanchéité entre les tôles de l'assemblage. Dans le cadre de la présente invention, ce sont donc les cordons extérieurs ou cordons d'extrémité libre qui sont lissés afin de ne pas réduire les jeu fonctionnels avec les pièces environnantes de l'assemblage desdites au moins deux tôles.

Avantageusement, les premier et deuxième cordons d'étanchéité sont réalisés lors d'un processus de cataphorèse puis de passage en étuve desdites au moins deux tôles.

La présente invention présente donc l'avantage de ne pas avoir à perturber les étapes de peinture en étant compatibles avec la cataphorèse et le passage en étuve, d'autant plus que l'application de tels traitements optimalise les caractéristiques d'étanchéité des premier et deuxième cordons d'étanchéité.

L'invention concerne aussi une pièce formée d'au moins deux tôles assemblées conformément à un tel procédé, caractérisée en ce que lesdites au moins deux tôles de la pièce comportent entre elles une triple liaison d'étanchéité formée, d'une part, par un cordon de colle étanche entre les portions d'extrémité desdites au moins deux tôles et, d'autre part, par les premier et deuxième cordons d'étanchéité à une extrémité libre respective des portions d'extrémité se chevauchant desdites au moins deux tôles. Ces caractéristiques sont reconnaissables sur une pièce prise isolément.

Dans une forme de réalisation préférée, la pièce est un bac de batterie pour au moins une batterie de puissance, le bac de batterie réalisant un sarcophage étanche pour ladite au moins une batterie de puissance en comportant une partie supérieure formant couvercle et une partie inférieure indépendante de la partie supérieure avec un joint d'étanchéité inséré entre les contours des parties inférieure et supérieure, au moins le couvercle comportant plusieurs éléments adjacents les uns aux autres et solidarisés entre eux, lesdites au moins deux tôles formant chacune un de deux éléments adjacents du couvercle.

Le joint d'étanchéité s'étend dans un plan perpendiculaire aux plans du cordon cordon de colle étanche entre les portions d'extrémité desdites au moins deux tôles et des premier et deuxième cordons d'étanchéité à une extrémité libre respective des portions d'extrémité se chevauchant desdites au moins deux tôles, ces cordons réalisant l'étanchéité à triple barrière ce qui permet de boucler les barrières entre elles et de garantir une étanchéité optimale.

Avantageusement, le couvercle comprend au moins trois éléments adjacents, chaque élément formant avec son élément adjacent ou séparément avec chacun de ses éléments adjacents un assemblage desdites au moins deux tôles.

Avantageusement, le couvercle comprend cinq éléments adjacents et la partie inférieure comprend deux éléments solidarisés entre eux en formant lesdites au moins deux tôles.

La présente invention concerne un ensemble d'au moins une batterie de traction et d'un bac de batterie intégrant la batterie de traction, caractérisé en ce que le bac de batterie est tel que précédemment décrit, le bac de batterie logeant en plus de ladite au moins une batterie de traction des organes auxiliaires pris unitairement ou en combinaison parmi un ou des boîtiers électroniques, un ou des boîtiers relais et un ou des conducteurs électriques de puissance et d'acquisition.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective de dessus d'une portion d'une partie supérieure d'un bac de batterie intégrant une batterie de traction d'un véhicule automobile, la partie supérieure comprenant des éléments en tôle solidarisés par un procédé d'assemblage selon la présente invention,
- la figure 2 est une représentation schématique d'une vue en coupe de deux portions de tôles solidarisées conformément à un procédé d'assemblage selon la présente invention,
- la figure 3 est une représentation schématique d'une vue en coupe d'un chevauchement de deux tôles montrant des espaces vides entre les deux tôles qui peuvent être remplis de colle lors de la mise en œuvre du procédé selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

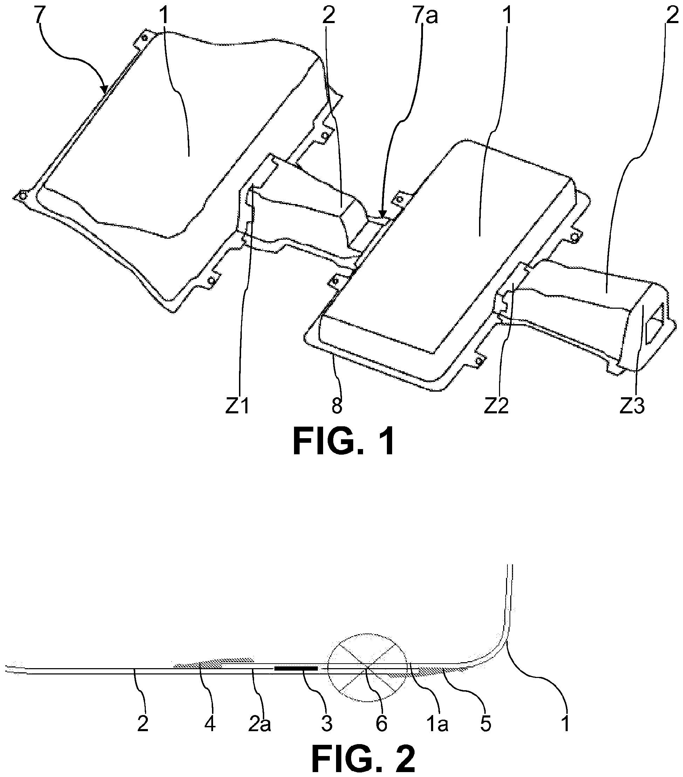

La figure 1 montre une portion d'une partie supérieure 7a de bac 7 de batterie pour une batterie de traction d'un véhicule automobile et pour des organes auxiliaires associés à la batterie. Une telle partie supérieure 7a de bac 7 de batterie peut comporter cinq éléments dont quatre sont représentés en étant référencés 1 et 2 à la figure 1, ces éléments étant en tôles recourbées. Dans ce mode de réalisation non limitatif, il peut exister trois zones de solidarisation Z1 à Z3 pour lesquelles un procédé d'assemblage selon la présente invention est mis en œuvre.

En se référant à toutes les figures et principalement à la figure 2, la présente invention concerne un procédé d'assemblage d'au moins deux tôles 1, 2 avec une portion d'extrémité 1a d'une première tôle 1 chevauchant une portion d'extrémité 2a d'au moins une deuxième tôle 2 comprenant les étapes suivantes.

La première étape est une application d'un cordon de colle 3 étanche dans une largeur de la portion d'extrémité d'une des tôles 1, 2. Le cordon de colle 3 est déposé continuement sur une des deux tôles 1, 2 de l'assemblage. Il s'agit d'un cordon de colle 3 dont les propriétés garantissent la prestation d'étanchéité.

Ce cordon peut être déposé juste lors de l'assemblage des deux tôles 1, 2 au ferrage mais il peut également être déposé à un stade amont de l'assemblage, par exemple chez le fournisseur d'une des deux tôles 1, 2.

La deuxième étape est un chevauchement des portions d'extrémité 1a, 2a avec écrasement du cordon de colle 3 entre les portions d'extrémité 1a, 2a, le chevauchement ayant été précédemment défini et pouvant ne pas consister uniquement en une superposition des portions d'extrémité 1a, 2a des tôles 1, 2.

Le cordon de colle 3 est écrasé, au moment de l'application desdites au moins deux tôles 1, 2 l'une sur l'autre, et il se dissipe sur une plus grande partie de la zone de recouvrement entre les deux tôles 1, 2.

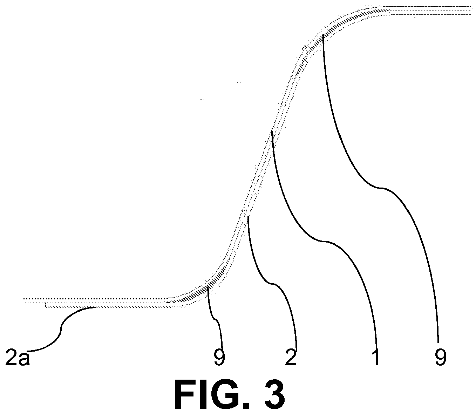

Pour des tôles 1, 2 de section en U avec emboîtement d'une tôle dans une autre, ce qui n'est pas limitatif, il est considéré que le cordon écrasé entre les deux tôles 1, 2 présente en plus l'intérêt d'aller combler les trous 9 qui sont formés entre les deux tôles 1, 2. Ceci est montré à la figure 3.

En se référant à nouveau principalement à la figure 2, la troisième étape est une solidarisation locale des portions d'extrémité 1a, 2a desdites au moins deux tôles 1, 2 l'une à l'autre. Cette solidarisation peut s'effectuer par soudage ou par emboutissage desdites au moins deux tôles 1, 2 entre au moins un jeu d'un poinçon et d'une matrice. Ceci n'est pas limitatif pour le type de solidarisation.

Le soudage peut être effectué sur une partie 6 des portions d'extrémité 1a, 2a se trouvant à distance du cordon de colle 3, le soudage pouvant être un soudage par points ou un soudage laser. Ceci n'est pas limitatif pour le type de soudage. En effet, le cordon de colle 3 peut être déposé à distance de la zone de soudure de manière à ne pas générer des émanations de gaz nocifs, qui peuvent se produire lors de la soudure.

La quatrième étape est une application d'un premier cordon 4 d'étanchéité du type mastic sur une extrémité libre de la portion d'extrémité 1a de la première tôle 1 et sur une zone en vis-à-vis de la deuxième tôle 2.

Ainsi, sur une extrémité libre d'une portion d'extrémité 1a d'une 1 desdites au moins deux tôles 1, 2 assemblées et liées mécaniquement, il est alors déposé un premier cordon 4 d'étanchéité du type mastic ou cordon d'étanchétié d'extrémité libre. Ce premier cordon 4 d'extrémité libre en mastic peut être déposé lors d'une étape de peinture mais il peut également être déposé à un stade amont de l'assemblage par exemple chez un fournisseur qui s'occupe également de l'assemblage.

Ce premier cordon 4 d'extrémité libre couvre la jonction apparente desdites au moins deux tôles 1, 2 à une extrémité libre 1a d'une desdites au moins deux tôles 1, 2.

Le premier cordon 4 d'extrémité libre est dans sa forme intiale généralement épais de 4 à 5 mm et avantageusement lissé afin de ne pas faire saillie vers l'extérieur de l'extrémité libre de la portion d'extrémité respectivement de la tôle le portant. Cette quatrième étape permet donc de réaliser la deuxième barrière d'étanchéité.

Cette quatrième étape est suivie d'une cinquième étape consistant en un retournement desdites au moins deux tôles 1, 2 et une application d'un deuxième cordon 5 d'étanchéité du type mastic sur une extrémité libre de la portion d'extrémité 2a de la deuxième tôle 2 et sur une zone en vis-à-vis de la première tôle 1.

La cinquième étape est similaire à la quatrième étape mais le deuxième cordon 5 d'extrémité libre est cette fois déposé sur une face opposée de l'assemblage à la face portant le premier cordon 4 d'extrémité libre, ce qui nécessite de retourner l'assemblage.

Le deuxième cordon 5 d'extrémité libre peut être lissé afin de répondre aux contraintes d'implantation. Cela permet de ne pas réduire les jeu fonctionnels avec des pièces qui pourraient se trouver à l'intérieur de l'assemblage desdites au moins deux tôles 1, 2 ainsi réalisé.

Par exemple pour un bac 7 de batterie, ce qui n'est pas limitatif dans le cadre de la présente invention, ces pièces 7 peuvent être des modules électriques, des conducteurs électriques haute tension bus ou bar ou d'autres organes réputés sensibles aux contacts et frottements.

La triple barrière d'étanchéité est donc obtenue à l'aide d'un cordon de colle 3 entre lesdites au moins deux tôles 1, 2 et de deux premier et deuxième cordons 4, 5 d'extrémité libre du type mastic sur deux faces opposées desdites au moins deux tôles 1, 2.

Les premier et deuxième cordons 4, 5 d'étanchéité d'extrémité libre respective peuvent être réalisés lors d'un processus de cataphorèse puis de passage en étuve desdites au moins deux tôles 1, 2.

En effet, les premier et deuxième cordons 4, 5 d'étanchéité d'extrémité libre respective obtiennent leurs meilleures caractéristiques finales après le passage en étuve cataphorèse, donc après cuisson pour atteindre leur réticulation optimale et définitive.

Les premier et deuxième cordons 4, 5 d'étanchéité d'extrémité libre sont donc compatibles avec des passages dans des bains cataphorèse et des passages en étuve à forte température.

Cette particularité de cordon réticulé après passage en étuve est également intéressante car elle permet de tester directement l'assemblage pendant la mise en œuvre du procédé. Pour un exemple non limitatif de bac 7 de batterie comme pièce obtenue lors de l'assemblage desdites au moins deux tôles 1, 2, l'étanchéité du couvercle 7a supérieur peut être testé par mise en pression ou dépression sans attendre la réticulation des premier et deuxième cordons 4, 5 d'extrémité libre du type mastic.

En effet, il est connu parfois de réaliser des étanchéités par des mastics qui ne passent pas en étuve cataphorèse, ce qui induit un temps important de mise en attente et donc la mise en place d'une zone de gestion des encours afin de ne pas perturber le flux de production. Si la réticulation n'est pas atteinte à la mise en pression pour le test d'étanchéité, le cordon est chassé par la pression ce qui ne se produit pas avec un cordon réticulé.

En se référant plus particulièrement aux figures 1 et 2, l'invention concerne aussi une pièce 7 formée d'au moins deux tôles 1, 2 assemblées conformément à un procédé tel que décrit précédemment.

Lesdites au moins deux tôles 1, 2 de la pièce 7 comportent entre elles une triple liaison ou barrière d'étanchéité formée, d'une part, par un cordon de colle 3 étanche entre les portions d'extrémité 1a, 2a desdites au moins deux tôles 1, 2 et, d'autre part, par les premier et deuxième cordons 4, 5 d'étanchéité à une extrémité libre respective des portions d'extrémité 1a, 2a se chevauchant desdites au moins deux tôles 1, 2.

Dans une application préférentielle mais non limitative, la pièce peut être un bac 7 de batterie pour au moins une batterie de puissance, le bac 7 de batterie réalisant un sarcophage étanche pour ladite au moins une batterie de puissance. Un tel bac 7 de batterie peut être formé d'éléments en tôles 1, 2 en acier inoxydable embouties comme des tôles 1, 2 en aluminium ou en composite embouties.

Le bac 7 de batterie peut comporter une partie supérieure 7a formant couvercle et une partie inférieure, non montrée à la figure 1, indépendante de la partie supérieure 7a avec un joint d'étanchéité 8 amovible inséré entre les contours des parties inférieure et supérieure. Ce joint 8 est fréquemment un joint GURIT^{®} aux propriétés spécifiques qui sera plus précisément ultérieurement décrit.

Au moins le couvercle 7a ou partie supérieure du bac 7 de batterie peut comporter plusieurs éléments adjacents les uns aux autres et solidarisés entre eux. Au moins un assemblage de deux tôles 1, 2 adjacentes peut être fabriqué par le procédé comme précédemment mentionné en présentant une triple barrière d'étanchéité, lesdites au moins deux tôles 1, 2 formant chacune un de deux éléments adjacents du couvercle 7a.

Des éléments du couvercle 7a ou de la partie inférieure peuvent être de section en forme de U et s'emboîter les uns dans les autres. Les éléments sont ainsi de forme parallélépipédique de dimensions différentes pour chaque élément en étant tous ouvert sur une face, les faces ouvertes des éléments du couvercle 7a étant en vis-à-vis à une face ouvertes d'un des éléments de la partie inférieure .

Le couvercle 7a peut comprendre au moins trois éléments adjacents, chaque élément formant avec un élément adjacent qui lui est adjacent ou séparément avec chacun de ses éléments adjacents un assemblage desdites au moins deux tôles 1, 2.

Dans une forme de réalisation préférée, le couvercle 7a peut comprendre cinq éléments adjacents et la partie inférieure peut comprendre deux éléments solidarisés entre eux en formant lesdites au moins deux tôles 1, 2. Seuls quatre éléments sont montrés à la figure 1 mais ceci n'est pas limitatif en étant une vue partielle du couvercle 7a supérieur.

Ainsi, dans cette forme de réalisation préférée, une triple barrière d'étanchéité peut être appliquée sur les zones de chevauchement de tôles 1, 2 embouties en forme de U des cinq éléments constituant le couvercle 7a supérieur mais aussi sur l'unique chevauchement entre les deux éléments de la partie inférieure du bace de batterie.

Un avantage spécifique est que la triple barriere d'étanchéité ainsi obtenue pour le couvercle 7a et la triple barrière d'étanchéité obtenue entre les deux éléments de la partie inférieure sont particulièrement bien adaptées au joint d'étanchéité 8 qui se touve entre le couvercle 7a formant partie supérieure et la partie inférieure du bac 7 de batterie.

Ce joint d'étanchéité peut être réalisé par un cordon GURIT^{®} du type de celui utilisé pour entourer les pares-brises de véhicule automobile en étant par exemple de 7 mètres de long. Le cordon GURIT^{®} croise les zones à triple barrière à angle droit ce qui permet de boucler les barrières entre elles et de garantir une étanchéité optimale.

Les cordons lissés de la triple barrière sont idéaux pour la cohésion du cordon GURIT^{®} qui ne tolére pas la forme de marche qui est généré par le recouvrement de deux tôles 1, 2. L'obtention d'une triple barrière ou liaison d'étanchéité conformément à la mise en œuvre d'un procédé selon l'invention permet de lisser la marche générée par le recouvrement des tôles 1, 2, ce qui sécurise l'étanchéité du cordon GURIT^{®}.

L'assemblage d'au moins deux tôles 1, 2 obtenu conformément à un procédé selon la présente invention est aussi compatible avec d'autres dispositifs qu'un cordon GURIT^{®}, par exemple des joints EPDM moulés ou extrudés, EPDM signifiant un caoutchouc à base d'éthylène-propylène-diène monomère ou des barrières en mousse.

La présence d'une triple barrière d'étanchéité ne nécessite pas d'augmenter l'encombrement des zones en recouvrement entre les tôles 1, 2, ce qui permet notamment de garantir le montage du bac 7 de batterie sur la base d'un véhicule automobile en garantissant les bons jeux à l'intérieur du bac comme à l'extérieur.

La présente invention concerne un ensemble d'au moins une batterie de traction et d'un bac 7 de batterie intégrant la batterie de traction. Le bac 7 de batterie est tel que précédemment décrit avec plusieurs jeux de triples liaisons ou barrières d'étanchéité.

Le bac 7 de batterie loge en plus de ladite au moins une batterie de traction des organes auxiliaires pris unitairement ou en combinaison parmi un ou des boîtiers électroniques, un ou des boîtiers relais et un ou des conducteurs électriques de puissance et d'acquisition. Ceci n'est pas limitatif.

Tous ces organes auxiliaires de même que la batterie sont logés dans un ou des éléments creux parallélépipédiques du couvercle 7a réunis avec un élément correspondant de la partie inférieure pour former des ensembles creux étanches.

L'invention n'est nullement limitée aux modes de réalisation décrits et illustrés qui n'ont été donnés qu'à titre d'exemples.

## Revendications

1. Procédé d'assemblage d'au moins deux tôles (1, 2) avec une portion d'extrémité (1a) d'une première tôle (1) chevauchant une portion d'extrémité (2a) d'au moins une deuxième tôle (2) comprenant les étapes suivantes:
- application d'un cordon de colle (3) étanche dans une largeur de la portion d'extrémité d'une des tôles (1, 2),
- chevauchement des portions d'extrémité (1a, 2a) et écrasement du cordon de colle (3) entre les portions d'extrémité (1a, 2a),
- solidarisation locale des portions d'extrémité (1a, 2a) l'une à l'autre,
- application d'un premier cordon (4) d'étanchéité du type mastic sur une extrémité libre de la portion d'extrémité (1a) de la première tôle (1) et sur une zone en vis-à-vis de la deuxième tôle (2),
- retournement desdites au moins deux tôles (1, 2) et application d'un deuxième cordon (5) d'étanchéité du type mastic sur une extrémité libre de la portion d'extrémité (2a) de la deuxième tôle (2) et sur une zone en vis-à-vis de la première tôle (1).

2. Procédé selon la revendication précédente, dans lequel la solidarisation se fait par soudage ou par emboutissage desdites au moins deux tôles (1, 2) entre au moins un jeu d'un poinçon et d'une matrice.

3. Procédé selon la revendication précédente, dans lequel le soudage est effectué sur une partie (6) des portions d'extrémité (1a, 2a) se trouvant à distance du cordon de colle (3), le soudage étant un soudage par points ou un soudage laser.

4. Procédé selon l'une quelconque des revendications précédentes, dans lequel les premier et deuxième cordons (4, 5) d'étanchéité sont lissés afin de ne pas faire saillie vers l'extérieur de l'extrémité libre de la portion d'extrémité (1a, 2a) respectivement de la première tôle (1) ou de la deuxième tôle (2).

5. Procédé selon l'une quelconque des revendications précédentes, dans lequel les premier et deuxième cordons (4, 5) d'étanchéité sont réalisés lors d'un processus de cataphorèse puis de passage en étuve desdites au moins deux tôles (1, 2).

6. Pièce (7) formée d'au moins deux tôles (1, 2) assemblées conformément à un procédé selon l'une quelconque des revendications précédentes, **caractérisée en ce que** lesdites au moins deux tôles (1, 2) de la pièce (7) comportent entre elles une triple liaison d'étanchéité formée, d'une part, par un cordon de colle (3) étanche entre les portions d'extrémité (1a, 2a) desdites au moins deux tôles (1, 2) et, d'autre part, par les premier et deuxième cordons (4, 5) d'étanchéité à une extrémité libre respective des portions d'extrémité (1a, 2a) se chevauchant desdites au moins deux tôles (1, 2).

7. Pièce (7) selon la revendication précédente, laquelle est un bac (7) de batterie pour au moins une batterie de puissance, le bac (7) de batterie réalisant un sarcophage étanche pour ladite au moins une batterie de puissance en comportant une partie supérieure (7a) formant couvercle et une partie inférieure indépendante de la partie supérieure (7a) avec un joint d'étanchéité (8) inséré entre les contours des parties inférieure et supérieure (7a), au moins le couvercle (7a) comportant plusieurs éléments adjacents les uns aux autres et solidarisés entre eux, lesdites au moins deux tôles (1, 2) formant chacune un de deux éléments adjacents du couvercle (7a).

8. Pièce (7) selon la revendication précédente, dans laquelle le couvercle (7a) comprend au moins trois éléments adjacents, chaque élément formant avec son élément adjacent ou séparément avec chacun de ses éléments adjacents un assemblage desdites au moins deux tôles (1, 2).

9. Pièce (7) selon la revendication précédente, dans laquelle le couvercle (7a) comprend cinq éléments adjacents et la partie inférieure comprend deux éléments solidarisés entre eux en formant lesdites au moins deux tôles (1, 2).

10. Ensemble d'au moins une batterie de traction et d'un bac (7) de batterie intégrant la batterie de traction, **caractérisé en ce que** le bac (7) de batterie est une pièce (7) selon l'une quelconque des revendications 7 à 9, le bac (7) de batterie logeant en plus de ladite au moins une batterie de traction des organes auxiliaires pris unitairement ou en combinaison parmi un ou des boîtiers électroniques, un ou des boîtiers relais et un ou des conducteurs électriques de puissance et d'acquisition.

## Patentansprüche

1. Verfahren zum Zusammenfügen von mindestens zwei Blättern (1, 2), wobei ein Endabschnitt (1a) eines ersten Blatts (1) einen Endabschnitt (2a) von mindestens einem zweiten Blatt (2) überlappt, umfassend die folgenden Schritte:
- Aufbringen einer wasserfesten Klebstoffraupe (3) über eine Breite des Endabschnitts einer der Bahnen (1, 2),
- Überlappen der Endabschnitte (1a, 2a) und Quetschen der Kleberaupe (3) zwischen den Endabschnitten (1a, 2a),
- lokale Befestigung der Endabschnitte (1a, 2a) aneinander,
- Aufbringen einer ersten Dichtungsraupe (4) vom Mastixtyp auf ein freies Ende des Endabschnitts (1a) der ersten Folie (1) und auf eine Zone, die der zweiten Folie (2) zugewandt ist,
- Umdrehen der mindestens zwei Blätter (1, 2) und Aufbringen einer zweiten Dichtungsraupe (5) vom Mastixtyp auf ein freies Ende des Endabschnitts (2a) des zweiten Blatts (2) und auf einen Bereich, der dem ersten zugewandt ist Blatt (1).

2. Verfahren nach dem vorhergehenden Anspruch, bei dem das Verbinden durch Schweißen oder durch Stanzen der mindestens zwei Bleche (1, 2) zwischen mindestens einem Satz aus Stempel und Matrize erfolgt.

3. Verfahren nach dem vorhergehenden Anspruch, bei dem das Schweißen an einem von der Kleberaupe (3) beabstandeten Teil (6) der Endabschnitte (1a, 2a) durchgeführt wird, wobei das Schweißen ein Punktschweißen ist oder a Schweißlaser.

4. Verfahren nach einem der vorhergehenden Ansprüche, bei dem die ersten und zweiten Dichtungswülste (4, 5) geglättet werden, damit sie nicht nach außen von dem freien Ende des Endabschnitts (1a, 2a) jeweils der ersten Folie (1) oder das zweite Blatt (2).

5. Verfahren nach einem der vorangehenden Ansprüche, bei dem die ersten und zweiten Dichtungsschnüre (4, 5) während eines Kataphorese und anschließenden Durchgangsvorgangs der mindestens zwei Folien (1, 2) in einem Ofen hergestellt werden.

6. Teil (7), gebildet aus mindestens zwei Blechen (1, 2), zusammengesetzt nach einem Verfahren nach einem der vorhergehenden Ansprüche, **dadurch gekennzeichnet, dass** die mindestens zwei Bleche (1, 2) das Teil (7) umfassen zwischen ihnen eine dreifache Siegelverbindung, die einerseits durch eine Kleberaupe (3) gebildet ist, die zwischen den Endabschnitten (1a, 2a) der mindestens zwei Blätter (1, 2) versiegelt ist, und andererseits, durch die ersten und zweiten Dichtungsschnüre (4, 5) an einem jeweiligen freien Ende der überlappenden Endabschnitte (1a, 2a) der mindestens zwei Blätter (1, 2).

7. Teil (7) nach dem vorhergehenden Anspruch, der ein Batteriekasten (7) für mindestens eine Leistungsbatterie ist, wobei der Batteriekasten (7) einen verschlossenen Sarkophag für die mindestens eine Leistungsbatterie bildet, umfassend einen oberen Teil (7a). Ausbilden eines Deckels und eines vom Oberteil unabhängigen Unterteils (7a) mit einer zwischen den Konturen des Unter- und Oberteils (7a) eingefügten Dichtung (8), wobei zumindest der Deckel (7a) aus mehreren aneinander angrenzenden Elementen besteht und miteinander verbunden sind, wobei die mindestens zwei Blätter (1, 2) jeweils eines von zwei benachbarten Elementen der Abdeckung (7a) bilden.

8. Teil (7) nach dem vorhergehenden Anspruch, bei dem die Abdeckung (7a) mindestens drei benachbarte Elemente umfasst, wobei jedes Element mit seinem benachbarten Element oder separat mit jedem seiner benachbarten Elemente eine Anordnung der mindestens zwei Blätter (1, 2).

9. Teil (7) nach dem vorhergehenden Anspruch, bei dem die Abdeckung (7a) fünf benachbarte Elemente umfasst und der untere Teil zwei Elemente umfasst, die durch Bilden der mindestens zwei Blätter (1, 2) aneinander befestigt sind.

10. Satz aus mindestens einer Traktionsbatterie und einem die Traktionsbatterie enthaltenden Batteriekasten (7), **dadurch gekennzeichnet, dass** der Batteriekasten (7) ein Teil (7) nach einem der Ansprüche 7 bis 9 ist, die Batteriewanne (7) Aufnehmen, zusätzlich zu der mindestens einen Traktionsbatterie, Hilfskomponenten, die einzeln oder in Kombination von einem oder mehreren Elektronikkästen, einem oder mehreren Relaiskästen und einem oder mehreren elektrischen Leistungsleitern genommen werden, und Erfassung.

## Claims

1. Method of assembling at least two sheets (1, 2) with an end portion (1a) of a first sheet (1) overlapping an end portion (2a) of at least a second sheet (2) including the following steps:
- application of a waterproof bead of adhesive (3) across a width of the end portion of one of the sheets (1, 2),
- overlapping of the end portions (1a, 2a) and crushing of the bead of adhesive (3) between the end portions (1a, 2a),
- local attachment of the end portions (1a, 2a) to each other,
- application of a first sealant bead (4) of the mastic type on a free end of the end portion (1a) of the first sheet (1) and on a zone facing the second sheet (2),
- turning said at least two sheets (1, 2) upside down and applying a second sealing bead (5) of mastic type to a free end of the end portion (2a) of the second sheet (2) and to a area facing the first sheet (1).

2. Method according to the preceding claim, in which the joining is done by welding or by stamping said at least two sheets (1, 2) between at least one set of a punch and a die.

3. Method according to the preceding claim, in which the welding is carried out on a part (6) of the end portions (1a, 2a) located at a distance from the bead of adhesive (3), the welding being a spot welding or a welding laser.

4. Method according to any one of the preceding claims, in which the first and second sealing beads (4, 5) are smoothed so as not to protrude outwards from the free end of the end portion (1a , 2a) respectively of the first sheet (1) or the second sheet (2).

5. Method according to any one of the preceding claims, in which the first and second sealing cords (4, 5) are produced during a process of cataphoresis then of passage in an oven of the said at least two sheets (1, 2).

6. Part (7) formed from at least two sheets (1, 2) assembled according to a method according to any one of the preceding claims, **characterized in that** the said at least two sheets (1, 2) of the part (7) comprise between them a triple sealing connection formed, on the one hand, by a bead of adhesive (3) sealed between the end portions (1a, 2a) of the said at least two sheets (1, 2) and, on the other hand, by the first and second sealing cords (4, 5) at a respective free end of the overlapping end portions (1a, 2a) of the said at least two sheets (1, 2).

7. Part (7) according to the preceding claim, which is a battery box (7) for at least one power battery, the battery box (7) forming a sealed sarcophagus for the said at least one power battery comprising an upper part (7a) forming a cover and a lower part independent of the upper part (7a) with a seal (8) inserted between the contours of the lower and upper parts (7a), at least the cover (7a) comprising several adjacent elements to each other and joined together, said at least two sheets (1, 2) each forming one of two adjacent elements of the cover (7a).

8. Part (7) according to the preceding claim, in which the cover (7a) comprises at least three adjacent elements, each element forming with its adjacent element or separately with each of its adjacent elements an assembly of the said at least two sheets (1, 2).

9. Part (7) according to the preceding claim, in which the cover (7a) comprises five adjacent elements and the lower part comprises two elements secured together by forming the said at least two sheets (1, 2).

10. Set of at least one traction battery and a battery box (7) incorporating the traction battery, **characterized in that** the battery box (7) is a part (7) according to any one of claims 7 to 9, the battery tray (7) housing, in addition to said at least one traction battery, auxiliary components taken individually or in combination from one or more electronic boxes, one or more relay boxes and one or more electrical power conductors and acquisition.
